# EUROPEAN PATENT SPECIFICATION

(11) **EP 0 445 738 B1**
(45) Date of publication and mention of the grant of the patent: **04.06.1997**
(21) Application number: 91103324.9
(22) Date of filing: 05.03.1991
(51) Int. Cl.: C08G 65/00, C08G 65/32

(54) **Perfluoropolyethers and processes for preparing them**
Perfluorether und Verfahren zu ihrer Herstellung
Polyéthers perfluorés et procédé pour leur préparation

(30) Priority: 06.03.1990 IT 1958590
(43) Date of publication of application: 11.09.1991
(73) Proprietor: AUSIMONT S.p.A., I-20121 Milano (IT)
(72) Inventor: Marraccini, Antonio, Dr., I-28040 Dormelletto, Novara (IT); Pasquale, Antonio, I-28100 Novara (IT); Staccione, Anna Maria, Dr., I-20144 Milan (IT); Marchionni, Giuseppe, Dr., I-20133 Milan (IT)
(74) Representative: Barz, Peter, Dr.

(56) References cited:
- EP-A- 0 259 980
- EP-A- 0 393 230
- EP-A- 0 393 230
- EP-A- 0 393 700
- US-A- 3 699 145
- US-A- 3 810 874
- EUR.POLYM JOURNAL, Vol 24, No 12, pages 1211-1216, 1988

## Description

The present invention relates to mixtures of new perfluoropolyethers and to processes for preparing them.

Various types of perfluoropolyethers are known, which may be obtained, for example, by oxidation of perfluoroolefins, such as C₂F₄ and C₃F₆, with oxygen, under the action of ultraviolet radiation. EP-A-259,980 describes perfluoropolyethers prepared in similar manner, starting from perfluoroolefins and perfluoroalkylvinylethers.

EP-A-393 700, a document relevant under Art. 54(3) EPC, discloses a process for preparing peroxidic perfluoropolyethers wherein one or more perfluoroolefins are reacted with oxygen in the liquid phase at a temperature not exceeding 50°C and in the presence of one or more compounds having at least one F-X bond (X = F, O, Cl).

It is an object of the present invention to provide a new class of peroxidic perfluoropolyethers.

Another object is the provision of a new class of non-peroxidic perfluoropolyethers prepared by the reduction of the above-mentioned peroxidic perfluoropolyethers.

A further object is to provide a new class of perfluoropolyethers having perfluoroalkyl end groups and optionally perfluoroalkyl end groups containing one or more ether oxygen atoms; or having one or two fluoroalkyl end groups; or having one or two functional end groups.

Still another object is that of providing new classes of perfluoropolyethers free of units of formula 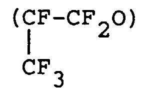 and

(CF₂-CF₂O)

having - at the same molecular weight as that of the perfluoropolyethers containing such units - a much lower viscosity than the perfluoropolyethers having such units.

Finally, another object is the provision of processes for preparing the above peroxidic perfluoropolyethers. Accordingly, the present invention provides mixtures of peroxidic perfluoropolyethers of general formula (I): 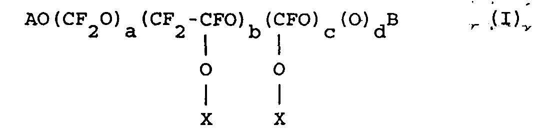 wherein the units in parentheses are statistically distributed along the chains; X represents a group of formula (CF₂O)ₘR", wherein R" is a straight chain perfluoroalkyl group having from 1 to 10 carbon atoms, a branched chain perfluoroalkyl group having from 3 to 10 carbon atoms or a cyclic perfluoroalkyl group having from 3 to 6 carbon atoms, and m ranges from 0 to 6;
the average values of a, b, c and d in the mixture are zero or numbers such that the sum (b+c) is at least 2 and the sum (a+b+c+d) is not higher than 15,000; (d being preferably different from zero);
provided that when a and/or c are different from zero and also b is different from zero, the ratio b/a+c in the mixture ranges from 10⁻¹ to 500; that when a and c are both different from zero, the ratio c/a in the mixture ranges from 10⁻¹ to 10; and that when d is different from zero, the ratio d/(a+b+c) in the mixture ranges from 0.05 to 0.5; and
the end groups A and B, the same or different from each other, are selected from 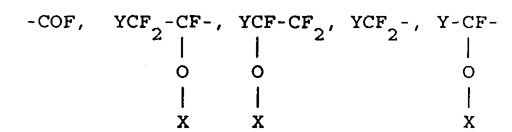
and a radical P selected from R³ and R⁴-O(CF₂O)ₙ-CF₂- in which R³ is a perfluoroalkyl group containing from 1 to 10 carbon atoms, R⁴ is a perfluoroalkyl group containing from 1 to 3 carbon atoms and n ranges from 1 to 10, or a radical formed by bond cleavage in a solvent selected from straight-chain and cyclic fluorocarbons, chlorofluorocarbons, perfluoroamines and perfluorinated ethers, Y being H (only for d=0), F, Cl, COF or a radical P as defined above. In these mixtures of perfluoropolyethers each individual molecule may lack one or more of the units (CF₂O), 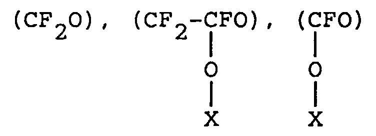 and (O).

The values for a, b, c and d refer to the individual polymeric molecules. In a mixture of molecules, said subscripts assume average values, which can be integers or intermediate values between zero and 1 or between an integer and the successive integer. Usually, the mixture of polymeric molecules contains the four units (CF₂O), 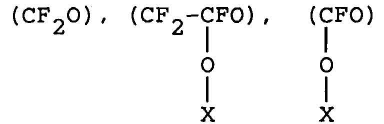 and (O).

The ratios of the subscripts defined hereinbefore apply to the mixtures of said molecules.

Preferably, the value of m in the group (CF₂O)ₘR" ranges from 0 to 3; most preferably it equals zero.

The groups R" are preferably selected from CF₃, C₂F₅, n-C₃F₇, i-C₃F₇, n-C₄F₉, i-C₄F₉ and t-C₄F₉. Among these groups, CF₃, C₂F₅ and n-C₃F₇ are particularly preferred, CF₃ and C₂F₅ being most preferred.

The value ranges for the subscripts a, b, c and d generally are as follows:
a : from 0 to 10,000,
b : from 0 to 10,000,
c : from 0 to 10,000,
d : from 0 to 10,000.

The sum (b+c) generally ranges from 2 to 15,000 and particularly from 3 to 5,000. The sum (a+b+c) generally ranges from 2 to 15,000 and particularly from 3 to 5,000. The sum (a+b+c+d) generally ranges from 2 to 15,000 and particularly from 3 to 5,000.

The mixtures of peroxidic perfluoropolyethers according to the present invention are preferably prepared by the processes described hereinafter.

According to a first process, into a liquid phase maintained at a temperature not exceeding +50°C and comprising a solvent and/or one or more perfluoroalkylvinylethers of general formula (II):

CF₂ = CF-OX (II)

wherein X has the meaning defined hereinbefore, there are fed a gaseous oxygen stream and, optionally, a gaseous or liquid stream of one or more perfluoroalkylvinylethers of formula (II), the latter stream being always present if the liquid phase does not contain perfluoroalkylvinylethers at the beginning of the reaction, and the liquid phase is exposed to radiation having a wavelength of from 200 to 600 nm, preferably 200 to 500 nm.

The first process is usually employed in the preparation of peroxidic perfluoropolyethers and is described, for example, in US-A-3,699,145.

Generally, the temperature of the liquid phase is kept at from -100 to +50°C and, preferably, from -80 to 0°C.

According to a second process, into a liquid phase maintained at a temperature not exceeding +25°C and comprising a solvent and/or one or more perfluoroalkylvinylethers of general formula (II) above there are introduced a gaseous oxygen stream, a gaseous or liquid stream of one or more compounds having one or more F-Q bonds (Q = F or O) and, optionally, a gaseous or liquid stream of one or more perfluoroalkylvinylethers of general formula (II), said last-mentioned stream being always present if the liquid phase does not contain perfluoroalkylvinylethers at the beginning of the reaction.

This process for the preparation of perfluoropolyethers is disclosed, e.g., in IT-A-20207 A/89 (corresponding to EP-A-393700 and 393705).

In this second process, the temperature of the liquid phase generally ranges from -120°C to +25°C.

The compounds having one or more F-Q bonds are referred to in the following as initiators (starters), this term, however, being not binding for the reaction mechanism.

When Q is oxygen, the starter is an organic compound containing one or more fluoroxy groups. More usually it is a perfluorinated alkyl or alkylene compound containing one or more fluoroxy groups and, optionally, one or more heteroatoms, in particular oxygen and chlorine atoms.

The number of heteroatoms, if any, generally ranges from 1 to 10. Preferably the heteroatom is an ether oxygen atom.

The compound having F-O bonds usually contains one or two fluoroxy groups.

Examples of preferred starters are:
(a) F₂;
(b) R³-OF, in which R³ is a perfluoroalkyl group containing 1 to 10, and preferably 1 to 3 carbon atoms (such as CF₃, C₂F₅ and n- or i-C₃F₇);
(c) R⁴-O(CF₂O)ₙCF₂OF, wherein R⁴ is a perfluoroalkyl group containing 1 to 3 carbon atoms, and n ranges from 1 to 10 and, preferably, from 1 to 2;
(d) FO-CF₂-OF.

The use of fluoroxy compounds as starters results in the formation, in the end groups A and B of the obtained peroxidic perfluoropolyethers, of radicals P stemming from said starters. Such radicals are the result of the cleavage of the OF bond and other cleavages occuring in the fluoroxy-compound.

When said end groups A and B consist of a radical P or contain it, said radical can represent, in particular, a radical R¹, where R¹ is equal to R³ or R⁴-O(CF₂O)ₙ-CF₂-, in which R³, R⁴ and n are as defined hereinbefore, or a radical R², derived from a cleavage of R³ or R⁴-O(CF₂O)ₙ-CF₂- and having a lower number of carbon atoms than R¹ (usually one carbon atom less than R¹).

Both in the first and in the second process, the solvent, when used at all, is preferably selected from straight-chain and cyclic fluorocarbons, chlorofluorocarbons, perfluoroamines and perfluorinated ethers.

Examples of suitable fluorocarbons and chlorofluorocarbons are CFCl₃, CF₂Cl₂, cyclo-C₄F₈, cyclo-C₆F₁₂, 1-chloropentafluoroethane, 1,1,2-trichloro-1,2,2-trifluoroethane, 1,2-dichlorotetrafluoroethane and 1,1,1-trifluorotrichloroethane.

Examples of suitable perfluoroamines are the perfluoroamines known under the tradename FLUORINERT® (3M).

Examples of suitable perfluorinated ethers are perfluoropolyethers having a boiling point lower than about 250°C, such as those known under the tradename GALDEN® (Montefluos).

Also the use of a solvent can give rise to the presence of radicals P in the end groups A and B, said radicals being variable in nature, depending on the nature of the solvent.

In the second process, also a gas which is inert under the reaction conditions is preferably introduced into the liquid phase. Said inert gas is usually fed in admixture with the starter or starters if said compounds are fed into the liquid phase in the form of a gaseous stream. It can be also fed, in part or as a whole, along with the oxygen. In other words, it is possible to use, instead of oxygen, mixtures of oxygen with inert gases, in particular air.

The inert gas, when used, is preferably selected from nitrogen, argon, helium, CF₄ and C₂F₆.

Both in the first and in the second process, oxygen is continuously fed into the liquid phase, the oxygen partial pressure in the reactor being generally in the range of from 0.001 to 1 MPa (0.01 to 10 atmospheres) and, more usually, from 0.005 to 0.1 MPa (0.05 to 1 atmosphere).

Both in the first and in the second process, the concentration of the perfluoroalkylvinylether(s) in the liquid phase generally ranges from 0.01 mole/liter to the molar concentration of the perfluoroalkylvinylether(s) in the pure (undiluted) state.

In the second process, the flowrate of thestarter(s) generally ranges from 0.001 to 5 moles per hour per liter of liquid phase and, more usually, from 0.01 to 2 moles per hour per liter of liquid phase.

Both in the first and in the second process, after a desired reaction time ranging, for example, from 0.1 to 20 hours, the feeding of the reagents is stopped. The solvent, if any, and the unreacted monomer or monomers are separated, preferably by distillation, and the peroxidic perfluoropolyethers are obtained as residue in the form of an oily liquid or a semisolid material.

The reaction can also be conducted in a completely continuous manner, by continuously withdrawing a portion of the liquid phase from the reactor, subjecting it to distillation, recycling the solvent, if any, and the unreacted monomer or monomers and recovering the reaction product.

It is also possible to combine the first and the second process, i.e. to conduct the reaction in the presence of ultra-violet radiation and, simultaneously, of starters.

By reduction of the peroxidic products of general formula (I) it is possible to obtain, by means of known processes, mixtures of non-peroxidic products of general formula (III): 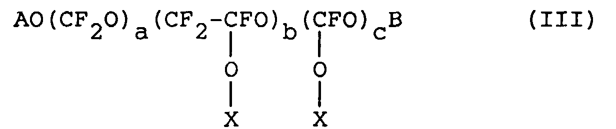 wherein A, B, X, a, b and c are as defined above; which are also an object of the present invention.

A suitable process for preparing the non-peroxidic products (III) comprises subjecting the peroxidic products (I) to a thermal reduction at temperatures generally ranging from 150 to 250°C as described, for example, in US-A-4,668,357.

Due to the thermal reduction, small amounts of units free of oxygen atoms in the polymeric chain, i.e. units of formulae 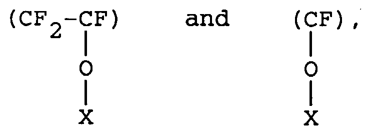 can form in the perfluoropolyether molecules.

Another suitable process comprises subjecting the peroxidic product (I) to a photochemical reduction at temperatures generally ranging from -40 to 150°C in the presence of radiation having a wavelength ranging from 200 to 600 nm (preferably 200 to 500 nm) and, optionally, in the presence of a solvent. This process is described, for example, in US-A-3,715,378.

Object of the present invention are also mixtures of new perfluoropolyethers having perfluoroalkyl end groups and optionally perfluoroalkyl end groups containing one or more ether oxygen atoms and being of general formula (IV): 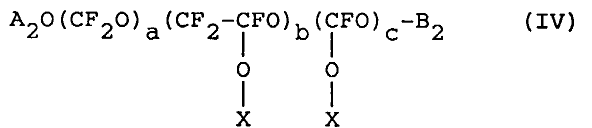 wherein a, b, c and X are as defined above.

The end groups A₂ and B₂, the same or different from each other, are selected from 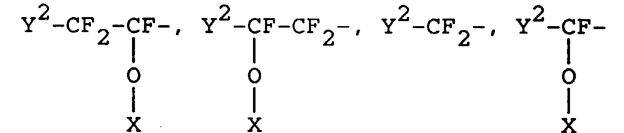 and radicals P formed by bond cleavage in the starter or the solvent which have been used in the process for preparing the peroxidic perfluoropolyethers (I), Y² being F, Cl or a radical P as defined above.

The radical P is in particular a radical R₁ or R₂ defined hereinbefore.

Thus, it is apparent that the possible presence of perfluoroalkyl end groups containing one or more ether oxygen atoms is due to the use, in the preparation process, of starters comprising organic fluoroxy compounds containing one or more ether oxygen atoms. The number of ether oxygen atoms generally ranges from 1 to 10, and preferably from 1 to 2.

A suitable process for obtaining the perfluoropolyethers of general formula (IV) comprises subjecting the non-peroxidic product (III) to a thermal treatment in the presence of fluorine at temperatures generally ranging from 150 to 250°C, as described, for example, in US-A-4,668,357.

Another suitable process for preparing the perfluoropolyethers of general formula (IV) comprises subjecting the non-peroxidic product (III) to a photochemical reaction in the presence of fluorine. This treatment is generally carried out at temperatures ranging from 20 to 150°C in the presence of radiation having a wavelength preferably ranging from 200 to 500 nm and in the optional presence of a solvent. This process is described, for example, in US-A-4,664,766.

Another object of the present invention are perfluoropolyethers having one or two (hydro)fluoroalkyl end groups and being of general formula (V): 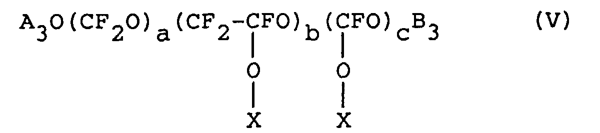 wherein a, b, c and X are as defined above and the end groups A₃ and B₃, the same or different from each other, are selected from 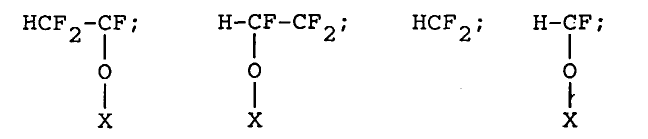 and the end groups A₂ and B₂ as defined hereinabove.

These perfluoropolyethers of formula (V) are preparable by reacting the non-peroxidic perfluoropolyether (III) with molten KOH at elevated temperature, as described, for example, in the article by D. Sianesi "Polieteri perfluorurati", La Chimica e l'Industria, Vol. 50 - No. 2, February 1968, pages 206-214.

A further object of the present invention are new perfluoropolyethers having one or two functional end groups and being of general formula (VI): 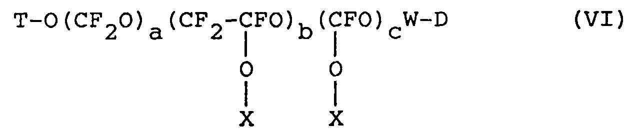 wherein:
a, b, c and X are as defined above;
W is a linking group of formula -CF₂- or 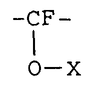
T is equal to D-W or is a perfluoroalkyl or oxyperfluoroalkyl group T₁ which is selected from 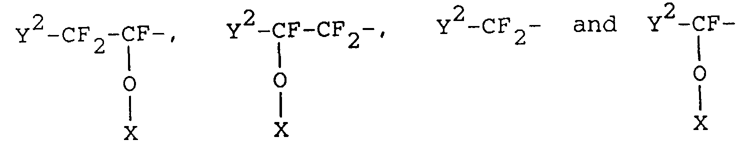 wherein Y² is as given above; and
D is selected from CN, CH₂Z, COR'", 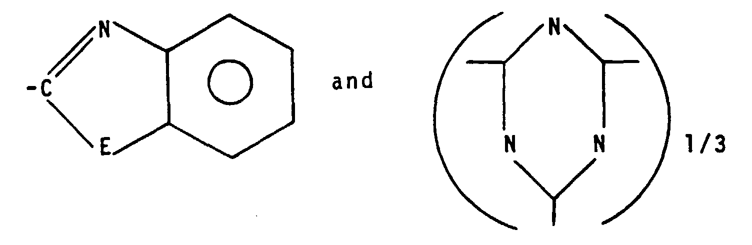 (wherein E represents NH, O or S).

When D is CH₂Z, Z is a group OR⁵, wherein R⁵ is selected from hydrogen; 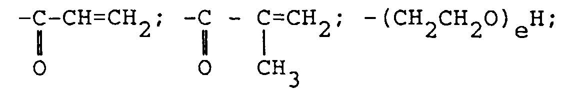 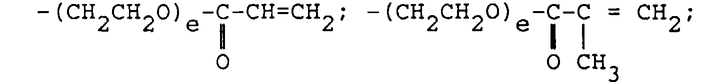 (wherein e is an integer of from 1 to 15) 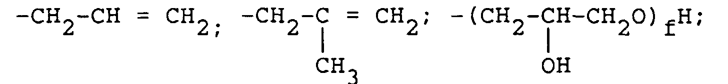 (wherein f is an integer ranging from 1 to 3) 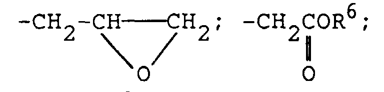 (wherein R⁶ is an alkyl group containing 1 to 30 carbon atoms and, optionally, ether bonds of the type -C-O-C-, or R⁶ is a group -(CH₂-CH₂O)ₚH wherein p ranges from 1 to 10) 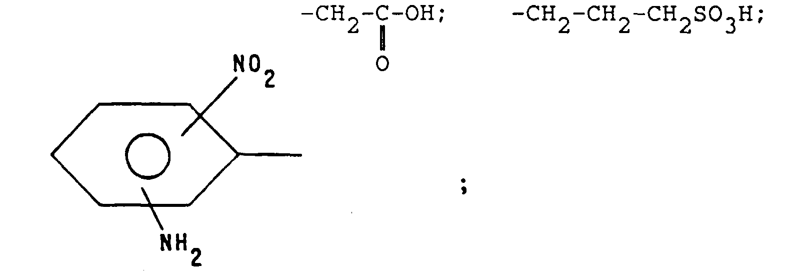 naphthyl; alkylbenzyl; and mono- or polysubstituted benzylalkoxy groups of formulae 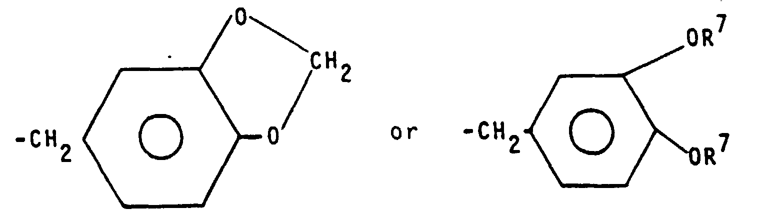 (wherein R⁷ is an alkyl group containing from 1 to 4 carbon atoms);
Z may also be a group NR⁸R⁹ wherein R⁸ and R⁹, the same or different from each other, represent hydrogen, groups R⁶ as defined above, or, when R⁸ is H, R⁹ can be a group of formula 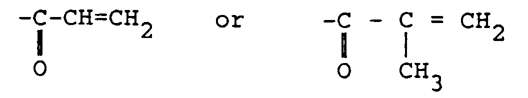 or R⁸ and R⁹ together form a cyclic group of formula 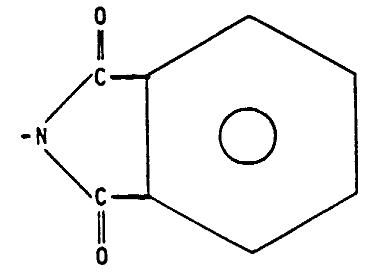 in which the phenyl group can carry a substituent such as the anhydride group

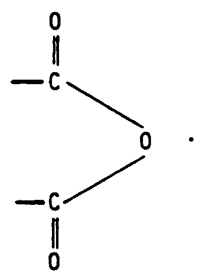

When D is a group COR"', R"' is a group NHR¹⁰ wherein R¹⁰ is hydrogen, alkyl containing 1 to 8 carbon atoms, mono- or polyhydroxyalkyl containing 1 to 8 carbon atoms, aminoalkyl containing 1 to 8 carbon atoms, allyl, methallyl, trimethoxy- or triethoxysilylalkyl of formula R¹¹-Si(OCH₃)₃ or R¹¹-Si(OC₂H₅)₃ (R¹¹ being an alkylene group containing 1 to 8 carbon atoms), isocyanoalkyl of formula R¹²NCO, R¹² being an alkylene group containing 1 to 8 carbon atoms, isocyanocycloalkyl containing 5 or 6 carbon atoms in the ring or isocyanoaryl containing 6 to 10 carbon atoms in the ring (e.g. isocyanophenyl); all of the above groups are optionally alkyl-substituted. R''' may also be an aromatic group which is optionally substituted by halogen atoms (e.g. F, Cl, Br) and/or hydrocarbyl groups (e.g. C₁-C₈ alkyl groups such as CH₃ and C₂H₅). Examples thereof are pentafluorophenyl, bromotetrafluorophenyl, dibromodifluorophenyl, bromophenyl and bromobenzophenyl.

The new functionalized perfluoropolyethers of formula (VI) can be prepared by known processes, starting from the peroxidic perfluoropolyethers of general formula (I) or from the non-peroxidic perfluoropolyethers of general formula (III), and possible known subsequent reactions in order to convert one functional group into another functional group.

In order to prepare functionalized perfluoropolyethers (VI) starting from the peroxidic perfluoropolyethers (I), a conventional reduction reaction, for example with HI, may be carried out at temperatures generally ranging from 20 to 50°C and in the presence of alcohols, thereby obtaining perfluoropolyethers containing ester end groups.

This reduction reaction is described, for example, in US-A-3,810,874.

In order to obtain functionalized perfluoropolyethers (VI) starting from non-peroxidic perfluoropolyethers (III) one may, e.g., subject the latter to a hydrolysis, whereby end groups -COF are converted into -COOH groups. This process is described, for example, in EP-A-340740.

The average functionality of the resulting perfluoropolyethers having end groups of formula -COOH or -COOR generally ranges from 0.1 to 1.99 and preferably from 1 to 1.99. Products having a higher functionality are generally obtained by means of the first process for preparing peroxidic perfluoropolyethers (I), i.e. the process which utilizes ultra-violet radiation.

To convert perfluoropolyethers (VI) containing COOH or COOR end groups to perfluoropolyethers containing other end groups, known processes may be used, which processes are described in many publications, for example in US-A-3,810,874; 4,721,795 and 4,757,145.

These processes are also described in IT-A-47869 A/89.

The number average molecular weight of the perfluoropolyethers of formulae (I), (III), (IV), (V) and (VI) according to the present invention generally ranges from 500 to 500,000 and particularly from 500 to 200,000.

The peroxidic perfluoropolyethers (I) are useful intermediates for the preparation of perfluoropolyethers of formulae (IV), (V) and (VI). Particularly when they have a relatively low molecular weight they are also useful as crosslinking agents for elastomeric polymers, for example the elastomeric copolymers of vinylidene fluoride and hexafluoropropene.

The non-peroxidic perfluoropolyethers (III) are useful as intermediates, as mentioned above.

The perfluoropolyethers of formulae (IV) and (V) are useful, in particular, as fluids for electronic tests, for example thermal shock, "NID" and cross leaks, as lubricants, as heat transfer fluids and as agents for protecting monuments from atmospheric agents and pollutants.

The perfluoropolyethers containing functional end groups (VI) are useful, in particular, as lubricants, additives for lubricants, oil- and water-repellent fluids and as agents for protecting monuments from atmospheric agents and pollutants.

In contrast to the known perfluoropolyethers, the perfluoropolyethers according to the present invention are free of units 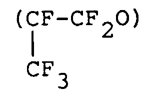 and

(CF₂-CF₂O).

As compared to the perfluoropolyethers containing such units, they exhibit a much lower viscosity at the same molecular weight. This property is particularly evident when X is CF₃ or CF₂-CF₃ and reaches its maximum when X is CF₃. This lower viscosity at the same molecular weight extends the field of use of the perfluoropolyethers according to the present invention both at low and high temperatures as compared to the above known perfluoropolyethers.

Since at the same viscosity, the perfluoropolyethers according to the present invention have a much higher molecular weight than the above known perfluoropolyethers, they show a much lower vapour tension, wherefore their field of application is by far wider, for example in applications where vacuum is employed.

The following examples are given to illustrate the present invention.

### EXAMPLE 1A

Into a cylindrical glass reactor (having a volume of 50 ml and an optical path of 1 mm) equipped with a coaxial inner quartz sheath, a plunging pipe for the introduction of gas, a sheath with a thermocouple for determining the internal temperature, and a reflux cooler maintained at a temperature of -80°C, there were introduced, at a temperature of -40°C, 87 g of liquid CF₂ = CFOCF₃.

3.8 N l/h of oxygen were bubbled into the-reactor through the plunging pipe. By means of an external cooling bath the temperature of the liquid phase was maintained at -40°C throughout the reaction. After having had introduced into the quartz sheath an ultra-violet ray lamp (125 W, type HELIOS, emitting radication of a wavelength of from 200 to 600 nm) said lamp was switched on simultaneously with the start of the oxygen feeding, and irradiation as well as oxygen feeding were continued for 3 hours.

Thereupon the lamp was switched off, the reaction mixture was degasified and the unreacted CF₂ = CF-OCF₃ was distilled off. Thereby an oily polymeric residue (21.4 g) was obtained. Said residue exhibited, on iodometric analysis, an active oxygen content of 1.0% by weight. According to ¹⁹F-NMR analysis it was-composed of peroxidic polyether chains of general formula (Ia): 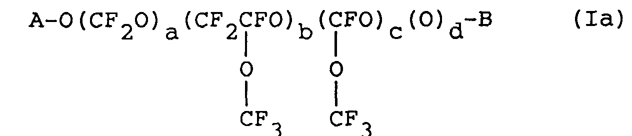 wherein A and B prevailingly represented CF₃ and COF. The ratio (a+c)/b was 0.81 and the ratio a/c was 1.4. The viscosity of the product at 20°C was 2130 mm²/s (cSt).

### EXAMPLE 1B

A 10.3 g portion of the product obtained in example 1A was introduced into a 25 ml flask equipped with a magnetic stirrer and was gradually heated to a temperature of 240°C within 5 hours. The flask was then maintained at this temperature for 2 hours.

At the end of the reaction, 7.6 g of product were recovered, which, according to ¹⁹F-NMR analysis, had the general formula (IIIa): 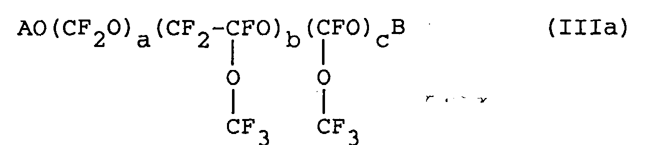 wherein the end groups A and B represented CF₃ and acid end groups of formulae

-CF₂COF

and

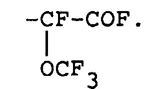

The amount of acid end groups was 0.07 mmole/g of oil.

Besides the oxyperfluoroalkylene units, there were present units of formula 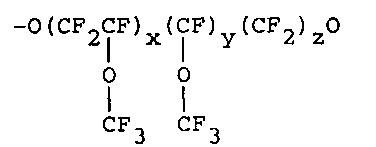 having 4 to 6 carbon atoms, in an amount of 0.42 mmole/g of oil.
In these units x + y + z = 2; or x = 0 and y + z = 2; or x = y = 0 and z = 2, respectively.

The product viscosity measured at 20°C was 350 mm²/s (cSt), and the iodometric analysis revealed the absence of peroxide groups.

### EXAMPLE 1C

Into a 600 ml flat-bottom cylindrical reactor provided with a magnetic stirring system and equipped with a cooled quartz sheath containing a Hg lamp (type Hanau TQ 150), a plunging pipe for the gas feeding and a thermometer sheath, there were charged 944 g of a non-peroxidic acid perfluoropolyether derived from the photooxidation of CF₃-O-CF = CF₂ in the liquid phase and the subsequent thermal reduction thereof, both carried out according to modalities analogous to those described in examples 1A and 1B. The starting product had a viscosity of 132 mm²/s (cSt) at 20°C, an (a+c)/b ratio of 0.80, an a/c ratio of 1.6 and a content of acid end groups equal to 0.23 mmole/g.

After the lamp, which emitted radiation of a wavelength ranging from 200 to 600 nm, had been turned on F₂ (3Nl/h) was caused to flow from the plunging pipe, while the temperature inside the reactor rose until it reached about 140°C. After a total time of 36 hours and 45 minutes of irradiation in the presence of fluorine, the reactor was discharged.

There were obtained 914 g of a product having a viscosity of 125 mm²/s (cSt) at 20°C which, according to ¹⁹F-NMR analysis, exhibited the chain structure of the starting product except that the acid end groups had been substituted by CF₃ end groups.

The product glass transition temperature was -96°C.

### EXAMPLE 2A

Using the apparatus of example 1A and following the procedure described therein, a photooxidation of 87 g of perfluoromethylvinylether was carried out at a temperature of -55°C.

At the end of the reaction, 25.8 g of product were obtained, which, on iodometric analysis, exhibited an active oxygen content of 1.6% by weight.

The ¹⁹F-NMR analysis revealed that it consisted of polyetherpolyperoxide chains of general formula (Ia): 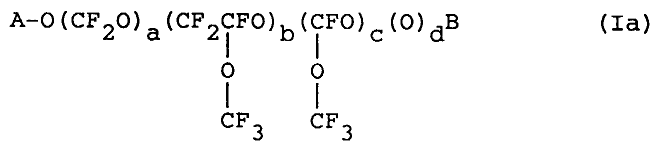 wherein A and B represented CF₃ and COF.

The ratio (a+c)/b was 0.49 and the ratio a/c was 1.2. The product viscosity at 20°C was 2350 mm²/s (cSt).

### EXAMPLE 2B

A 15.5 g portion of the product obtained in example 2A was placed into a 25 ml flask equipped with a magnetic stirrer and was gradually heated up to 190°C within 2 hours. This temperature was maintained for 1 hour. Thereafter the temperature was raised up to 240°C within 2 hours and was maintained at said value for a further 2 hours. At the end 10 g of product were recovered, which, according to ¹⁹F-NMR analysis, exhibited the same structure as the product of example 1B.

The end groups were:

-CF₃;

-CF₂COF

and

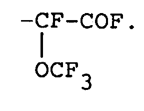

The content of acid end groups (i.e. groups containing the -COF group) was 0.11 mmole/g of oil and the content of units having 4 to 6 carbon atoms as defined in example 1B was 0.67 mmole/g of oil.

The product viscosity at 20°C was 300 mm²/s (cSt) and the iodometric analysis confirmed the absence of peroxide groups.

### EXAMPLE 3

Utilizing the apparatus described in example 1A and following the procedure described therein, a photooxidation of perfluoromethylvinylether at a temperature of -40°C was carried out by charging 50 g of liquid perfluoromethylvinylether and 40 g of liquid CF₂Cl₂ (used as solvent).

At the end of the reaction, the solvent and unreacted monomer were distilled off, thereby obtaining 14.6 g of an oily product which, according to iodometric analysis, exhibited an active oxygen content of 1.05% by weight.

The ¹⁹F-NMR analysis revealed that it consisted of polyether polyperoxide chains of the above general formula (Ia), wherein A and B prevailingly represented

-CF₂Cl

and

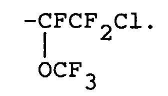

Small amounts of end groups -CF₃ and -COF were also present.

The ratio (a+c)/b was equal to 1.0 while the a/c ratio was equal to 1.4.
The product viscosity at 20°C was 880 mm²/s (cSt).

### EXAMPLE 4

Utilizing the apparatus and procedure described in example 1A, a photooxidation of 78 g of CF₂=CFOCF₂CF₃ was carried out at a temperature of -20°C.

At the end of the reaction, 17.2 g of product were obtained which, according to iodometric analysis, exhibited an active oxygen content of 0.4% by weight.

The product viscosity at 20°C was 7430 mm²/s cSt.
The ¹⁹F-NMR analysis revealed that the product was composed of polyether polyperoxide chains of general formula (Ib): 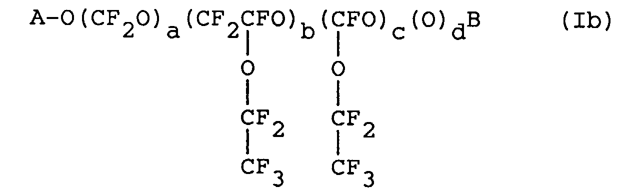 wherein A and B represent end groups CF₃, C₂F₅ and COF.

The ratio (a+c)/b was equal to 1.43 while the a/c ratio was equal to 1.5.

### EXAMPLE 5A

Utilizing the apparatus and the procedure described in example 1A, a photooxidation of CF₂ = CF-O-CF₂-CF₃ (89 g) was carried out at a temperature of -55°C.

At the end of the reaction there were obtained 23.9 g of a product which, according to iodometric analysis, exhibited an active oxygen content of 1.2% by weight.

The product viscosity at 20°C was 16,200 mm²/s (cSt).

The ¹⁹F-NMR analysis revealed that it consisted of polyether polyperoxide chains of the above general formula (IIb) wherein A and B represent end groups CF₃, C₂F₅ and COF. The ratio (a+c)/b was equal to 0.47 while the a/c ratio was equal to 0.4.

### EXAMPLE 5B

A 9.1 g portion of the product obtained in example 5A was introduced into a 25 ml flask equipped with a magnetic stirrer and-was gradually heated up to 240°C within 5 hours.

After 2 hours at said temperature, 5.6 g of a product were recovered which, according to iodometric analysis, did not contain peroxide groups.

The ¹⁹F-NMR analysis revealed, besides the previously defined ether structures, the presence of end groups

-CF₃,

-C₂F₅,

-CF₂COF

and

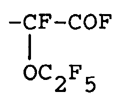

The content of acid end groups was 0.33 mmole/g of product. There was revealed also the presence of sequences of units having 5 to 8 carbon atoms (0.31 mmole/g of oil) of formula 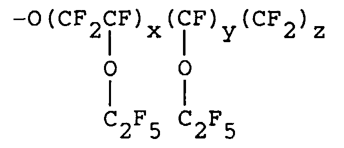 wherein
x + y + z = 2; or y + z = 2; or z = 2, respectively.
The product viscosity at 20°C was 180 mm²/s (cSt).

### EXAMPLE 6A

Using the apparatus and the procedure described in example 1A, a photooxidation of CF₂ = CF-O-CF₂-CF₃ (84 g) at a temperature of -40°C was carried out.

At the end of the reaction there were obtained 22.2 g of oil which, according to iodometric analysis, exhibited an active oxygen content of 0.7% by weight.

The product viscosity at 20°C was 9,600 mm²/s (cSt).
The general formula of the product, determined by means of ¹⁹F-NMR analysis, was identical with that of the product of example 4, with (a+c)/b = 0.74 and a/c = 1.0.

The end groups were identical with those of the product of example 4.

### EXAMPLE 6B

A 15 g portion of the product obtained in example 6A was dissolved in 70 g of perfluoroheptane and irradiated with ultra-violet light, using the apparatus described in example 1A, at a temperature of -20°C in a N₂ flow of 1 N l/h.

After 15 hours the irradiation was stopped, the resulting solution was transferred into a 100 ml flask and the solvent was removed by evaporation under vacuum. There were obtained 12 g of a product having a viscosity of 2,700 mm²/s (cSt) at 20°C which, according to iodometric analysis, was free of peroxide groups.

The ether structure of the product and its end groups, as determined by ¹⁹F-NMR were identical with those of the starting product.

### EXAMPLE 6C

A 70 g portion of the product obtained in example 6A was placed into a 25 ml flask equipped with a magnetic stirrer and was gradually heated up to 240°C within 5 hours. This temperature was maintained for another two hours. At the end of the reaction, 5.3 g of a product were recovered which, according to ¹⁹F-NMR analysis, had the same structure and the same end groups as that of example 5B.

The content of -COF end groups was 0.2 mmole/g of oil and the content of the sequences with 5 to 8 carbon atoms was 0.25 mmole/g of oil.

The product viscosity at 20°C was 240 mm²/s (cSt). The iodometric analysis did not reveal the presence of peroxide groups.

### EXAMPLE 7

In a 500 ml glass reactor equipped with stirrer, thermometer, cooler (with a liquid at -78°C connected to the atmosphere) and gas feeding pipes reaching the reactor bottom, 200 g of perfluoromethylvinylether were condensed.

Then, while keping the internal temperature at -72°C by means of external cooling, there were separately introduced, by bubbling into the liquid phase, an anhydrous oxygen flow of 2 N l/h and a flow of 0.5 N l/h of elemental F₂ diluted with 10 N 1/h of nitrogen, for 3.5 hours.

At the end of the reaction, the unreacted perfluoromethylvinylether and the reaction products having a boiling point lower than 30°C were removed from the reactor by means of an anhydrous N₂ flow.

Obtained were 23 g of a crude reaction product in the form of a colorless, transparent and viscous oil, the viscosity of which, measured at 20°C, was 355 mm²/s (cSt).

The active oxygen content, determined by iodometric analysis, was 3.1% by weight.

According to ¹⁹F-NMR analysis, the ether structure of the product and its end groups were analogous to those of the product of example 1A.

### EXAMPLE 8A

Using the apparatus of example 7, maintained at -72°C, 150 ml of dichlorodifluoromethane were condensed, whereupon a perfluoromethylvinylether flow of 3 N l/h and a mixture of 7 N l/h of O₂, 0.35 N l/h of methyl hypofluorite and 1 N l/h of nitrogen were introduced by separately bubbling them into the solvent.

After 3 hours, the reagent feeding was stopped, and the solvent and the reaction products having a boiling point lower than 30°C were removed by means of an anhydrous nitrogen flow.

Thus there were obtained 16 g of product in the form of a colorless, transparent and viscous oil.

The content of active oxygen in the product, determined by means of iodometric analysis, was 2.2% by weight.

The ¹⁹F-NMR analysis revealed that the product consisted of polyether polyperoxide chains of the above formula (Ia).

The end groups A and B consisted of

-CF₃,

-CF₂Cl,

-CF₂-CF₂Cl,

-COF

and

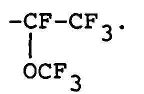

The ratio a+c/b was 1.7 and the a/c ratio was 2.0.

### EXAMPLE 8B

Following the procedure described in example 5B, a 10 g portion of the product obtained in example 8A was subjected to thermal reduction. There were obtained 6.5 g of a non-peroxidic product which, according to ¹⁹F-NMR analysis, showed the same ether units and the same end groups as the starting product, but in the following ratios:$\frac{\text{a + c}}{\text{b}} \text{= 1.3} \frac{\text{a}}{\text{c}} \text{= 1.7}$

The number average molecular weight of the product was 2,200.

### EXAMPLE 9

Using an apparatus similar to that employed in example 7, but having a volume of 250 ml, maintained at -72°C, 45 ml of dichlorodifluoromethane and 28 g of perfluoro n-propylvinylether were condensed.

Then, a mixture of 4 N l/h of oxygen, 0.35 N l/h of methyl hypofluorite and 7 N l/h of nitrogen was introduced.

After 1 hour and 25 minutes the feeding of the gas mixture was discontinued.

The oxypolymerization temperature was -65°C.
Volatile matter was removed by means of an anhydrous nitrogen flow whereupon the crude product was kept for about 24 hours in a N₂ flow at 50°C.

Thus 16.7 g of a product in the form of a colorless, transparent and viscous oil were obtained.

The viscosity thereof at 20°C was 41 mm²/s (cSt) and the active oxygen content, determined by iodometric analysis, was equal to 0.4% by weight.

The ¹⁹F-NMR analysis revealed that the product was composed of polyether polyperoxide chains of general formula (Ic):

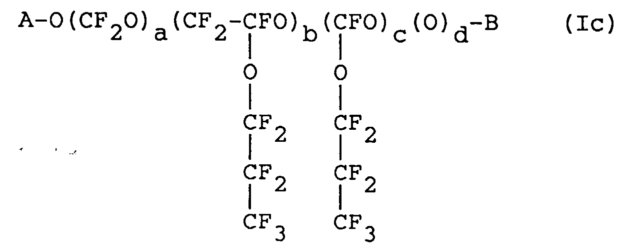

### EXAMPLE 10

Using the same apparatus and the procedure-described in example 1A, a mixture of perfluoromethylvinylether (32 g; 0.193 moles) and perfluoroethylvinylether (42 g; 0.194 moles) was photo-oxidized for 3 hours at -40°C. After the distillation of unreacted monomers an oily residue (20.9 g) having a viscosity of 5460 mm²/s (cSt) at 20°C was obtained which, according to iodometric analysis, had an active oxygen content of 0.64% by weight.

According to ¹⁹F-NMR analysis, the product was composed of a perfluoroether peroxide copolymer of formula (Id): 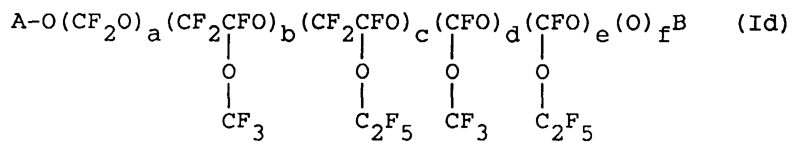 in which the units derived from perfluoromethylvinylether (b+d) and the units derived from perfluoroethylvinylether (c+e) were present in a molar ratio of about 1:1. The end groups A and B consisted prevailingly of CF₃, C₂F₅ and COF.

### EXAMPLE 11

In a 1,000 ml flask equipped with mechanical stirrer, thermometer, reflux cooler and dropping funnel, there was prepared a mixture of 99 g of peroxidic perfluoropolyether (derived from the photooxidation of CF₃-O-CF=CF₂ carried out according to a procedure similar to that described in example 1A), 150 ml of CF₂Cl-CFCl₂ and of 80 ml of CH₃OH.

The peroxidic crude product exhibited the following characteristics:
- active oxygen: = 1.65% by weight
- viscosity: = 2660 mm²/s (cSt) at 20°C
- (a+c)/b: = 0.8
- a/c: = 1.2.

Then, 76 g of aqueous HI (at 57% by weight) were gradually introduced through a dropping funnel and under stirring.

Upon completion of the addition the resulting mixture was maintained under reflux for about 7 hours in order to complete the reaction.

After having had ascertained, by means of ¹⁹F-NMR analysis, the complete disappearance of peroxide groups, the mixture was transferred into a separatory funnel. The lower phase was separated, washed once with a 0.01 N solution of Na₂S₂O₃ (in order to remove I₂ residues) then twice with H₂O and was finally dried over Na₂SO₄. After evaporation of the solvent under vacuum [2.7 kPa (20 Torr)], 77 g of perfluoropolyether having prevailingly -COOCH₃ end groups were obtained. The infrared analysis exhibited an intense band at 1787 cm⁻¹ which is attributable to the ester function.

The equivalent weight of the product, determined by acidimetric titration, was 630.

### EXAMPLE 12

9.3 g of the methyl ester derivative obtained in example 11 were charged into a 20 ml flask and 3 g of H₂O were added thereto. The resulting mixture was heated at reflux while slightly bubbling nitrogen through a plunging pipe, in order to achieve an effective mixing of the two phases. After 14 hours, the infrared analysis revealed the complete disappearance of the band attributable to the ester function. The organic phase was separated and then dried under vacuum [0.67 kPa (5 torr)] at 100°C. 9.0 g of perfluoropolyether having prevailingly -COOH end groups were obtained. THe infrared analysis showed a broadened band at 1770 cm⁻¹, typical of the -COOH group.

### EXAMPLE 13

Into a 250 ml flask equipped with mechanical stirrer, reflux cooler, thermometer and dropping funnel, there were charged 1.5 g of NaBH₄ (previously ground and dried for 3 hours at 150°C) and 40 ml of anhydrous ethanol. To this solution there were added over about one hour, by means of the dropping funnel, 14.5 g of the ester derivative obtained in example 11. The addition was carried out under a slight nitrogen flow both to maintain the anhydrous atmosphere and to dilute the hydrogen which developed during the reduction reaction. The rate of addition was regulated in order to have a reaction mixture temperature not exceeding 25°C. Upon completion of the addition the resulting mixture was stirred for one hour, whereupon an infrared analysis of the fluorinated phase indicated the total disappearance of the ester band and, therefore, the completeness of the reduction.

The hydrolysis of the intermediate boron alcoholate and the removal of the unreacted NaBH₄ were carried out by dropwise addition of a 10% HCl solution. Stirring was conducted for 2 hours at 50°C whereafter the organic phase was separated and then dried by heating under vacuum [0.67 kPa (5 torr)] at 100°C.

13.3 g of perfluoropolyether having end groups prevailingly consisting of -CH₂OH were obtained.

The ¹H-NMR analysis revealed that the following two types of alcohol end groups:

-OCF₂CH₂OH

and

-OCF(OCF₃)CH₂OH

were present in a 1 : 1.3 ratio.

### EXAMPLE 14

The product obtained in example 1C was subjected to fractionation according to the fractionated precipitation method.

To this end, 300 g of said product were dissolved, at 15°C, in 2,000 ml of Freon® 113.

Maintaining a constant temperature of 15°C, variable amounts of methanol were progressively added and the insoluble fractions were collected time by time.

Table 1 shows the amounts of added methanol, the amounts of collected fractions and, for each fraction, the viscosity at 20°C and the number average molecular weight determined by V.P.O.

**TABLE 1**

| FRACTION NO. | AMOUNT OF ADDED METHANOL (in ml) | PRODUCT AMOUNT IN THE FRACTION (in g) | VISCOSITY (mm²/s (cSt) at 20°C) | AVERAGE NUMBER MOLECULAR WEIGHT |
|---|---|---|---|---|
| 1 | 12 | 25,3 | 271 | - |
| 2 | 15 | 29,22 | 250 | 6,830 |
| 3 | 17 | 24,72 | 222 | 6,080 |
| 4 | 22 | 24,47 | 179 | 5,160 |
| 5 | 30 | 31,91 | 189 | 4,780 |
| 6 | 30 | 26,66 | 145 | - |
| 7 | 45 | 27,79 | 158 | 3,950 |
| 8 | 60 | 26,12 | 93 | 3,490 |
| 9 | 100 | 24,38 | 69 | 3,080 |
| 10 | in dry condition (i.e. after evaporation of the whole solvent) | 48,43 | 23 | 1,730 |

Example 2 of EP-A-259,980, relating to perfluoropolyethers prepared from perfluoroolefins and vinylethers, reports a viscosity of 226 mm²/s (cSt) at 20°C for a product containing the oxyperfluoroalkylene units 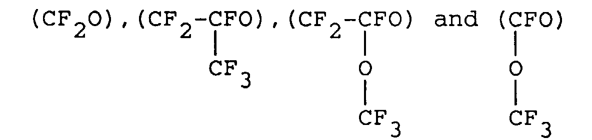 and having a number average molecular weight of 3,000 while a product of practically identical molecular weight but having only the units of formulae

(CF₂O)

and 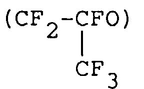 shows a viscosity of 270 mm²/s (cSt) at 20°C.

From Table 1 it is apparent that for a product according to the present invention, having a molecular weight of about 3,000 (see fraction 9), the viscosity is only 69 mm²/s cSt at 20°C.

## Claims

1. Mixtures of perfluoropolyethers of general formula (I): 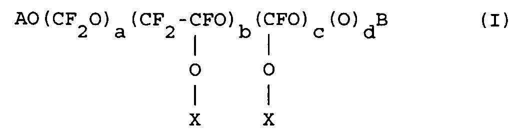 wherein the units in parentheses are statistically distributed along the chains; X represents a group of formula (CF₂O)ₘR", wherein R" is a straight chain perfluoroalkyl group having from 1 to 10 carbon atoms, a branched chain perfluoroalkyl group having from 3 to 10 carbon atoms or a cyclic perfluoroalkyl group having from 3 to 6 carbon atoms, and m ranges from 0 to 6;
the average values of a, b, c and d in the mixture are zero or numbers such that the sum (b+c), is at least 2 and the sum (a+b+c+d) is not higher than 15,000;
provided that when a and/or c are different from zero and also b is different from zero, the ratio b/a+c in the mixture ranges from 10⁻¹ to 500; that when a and c are both different from zero, the ratio c/a in the mixture ranges from 10⁻¹ to 10; and that when d is different from zero, the ratio d/(a+b+c) in the mixture ranges from 0.05 to 0.5; and
the end groups A and B, the same or different from each other, are selected from 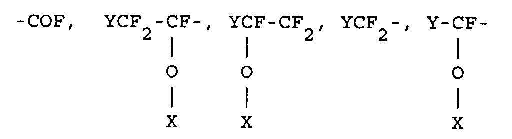
and a radical P selected from R³ and R⁴-O(CF₂O)ₙ-CF₂- in which R³ is a perfluoroalkyl group containing from 1 to 10 carbon atoms, R⁴ is a perfluoroalkyl group containing from 1 to 3 carbon atoms and n ranges from 1 to 10, or a radical formed by bond cleavage in a solvent selected from straight-chain and cyclic fluorocarbons, chlorofluorocarbons, perfluoroamines and perfluorinated ethers, Y being H (only for d=0), F, Cl, COF or a radical P as defined above.

2. Process for preparing the mixtures of perfluoropolyethers of claim 1, wherein into a liquid phase maintained at a temperature not exceeding about +50°C and comprising a solvent and/or one or more perfluoroalkylvinylethers of general formula (II):
CF₂ = CF-OX (II)
wherein X is as defined in claim 1, there are fed a gaseous oxygen stream and, optionally, a gaseous or liquid stream of one or more perfluoroalkylvinylethers of formula (II), the latter stream being always present if the liquid phase does not contain such perfluoroalkylvinylethers at the beginning of the reaction, and the liquid phase is subjected to irradiation with light having a wavelength of from 200 to 600 nm.

3. Process for preparing the mixtures of perfluoropolyethers of claim 1, wherein into a liquid phase maintained at a temperature not exceeding +25°C and comprising a solvent and/or one or more perfluoroalkylvinylethers of general formula (II) as defined in claim 2 there are fed a gaseous oxygen stream, a gaseous or liquid stream of one or more compounds having one or more F-Q bonds, wherein Q is selected from F and O, and, optionally, a gaseous or liquid stream of one or more perfluoroalkylvinylethers of general formula (II), the last-mentioned stream being always present if the liquid phase does not contain perfluoroalkylvinylethers at the beginning of the reaction.

4. Process according to claim 3, wherein the compounds having one or more F-Q bonds are selected from F₂ and organic compounds containing one or more fluoroxy bonds, particularly perfluorinated alkyl or alkylene compounds containing one or more fluoroxy groups and, optionally, one or more heteroatoms.

5. Process according to any one of claims 2 to 4, wherein the solvent, if any, is selected from straight chain and cyclic fluorocarbons, chlorofluorocarbons, perfluoroamines and perfluorinated ethers.

6. Process according to any one of claims 3 to 5, wherein a gas inert under the reaction conditions is also fed into the liquid phase.

7. Process according to any one of claims 3 to 6, wherein the flowrate of the compound or compounds having one or more F-Q bonds ranges from 0.001 to 5 moles per hour per liter of liquid phase.

8. Mixtures of perfluoropolyethers according to claim 1 of general formula (III): 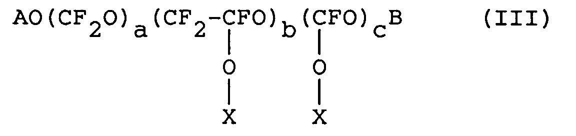 wherein A, B, X, a, b and c are as defined in claim 1.

9. Mixtures of perfluoropolyethers according to claim 1 having perfluoroalkyl end groups which optionally contain one or more ether oxygen atoms and being of general formula (IV): 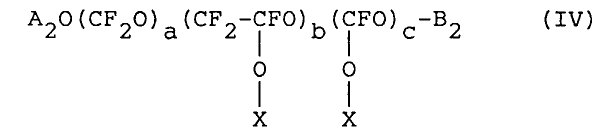 wherein a, b, c and X are as defined in claim 1 and A₂ and B₂, the same or different from each other, are selected from: 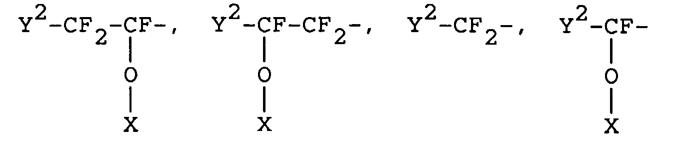 and radicals P formed by bond cleavage in the initiator or the solvent utilized in the process for preparing the perfluoropolyethers of general formula (I), Y² being F, Cl or a radical P as defined above.

10. Mixtures of perfluoropolyethers according to claim 1 having one or two fluoroalkyl end groups and being of general formula (V): 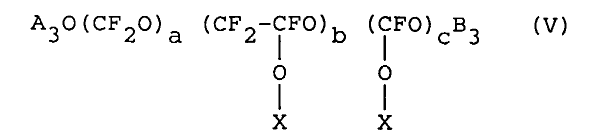 wherein a, b, c and X are as defined in claim 1, and A₃ and B₃, the same or different from each other, are selected from: 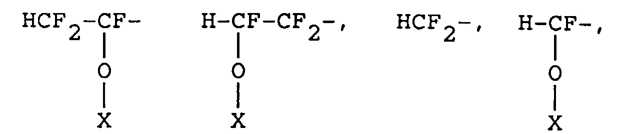 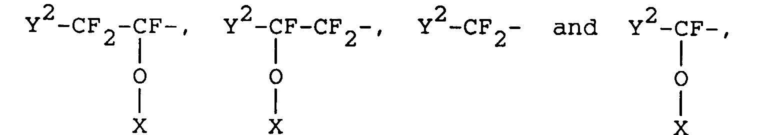 Y² being defined as in claim 9.

11. Mixtures of perfluoropolyethers having one or two functional end groups and being of general formula (VI): 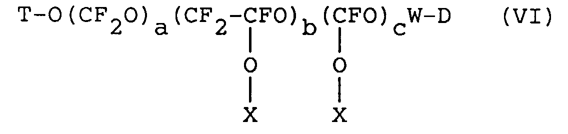 wherein:
W is a linking group of formula -CF₂- or 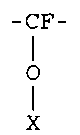
T is D-W or a perfluoroalkyl or oxyperfluoroalkyl group
T₁ which is selected from 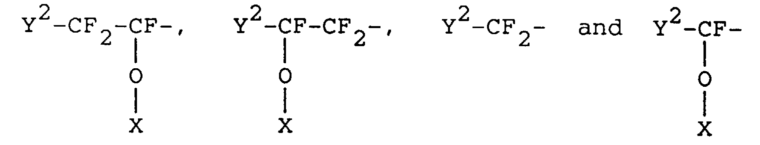 wherein Y² is as defined in claim 9;
X, a, b and c are as defined in claim 1;
D is selected from CN, CH₂Z, COR'", 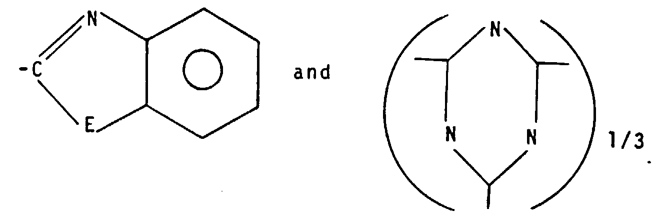 (wherein E represents NH, O or S);
Z being a group OR⁵, wherein R⁵ is selected from hydrogen; 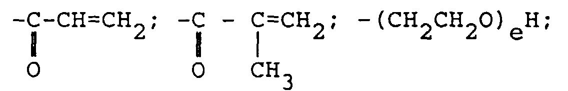 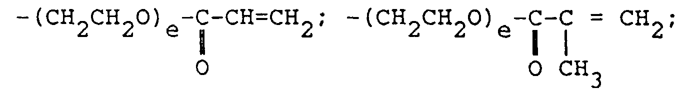 (wherein e is an integer of from 1 to 15) 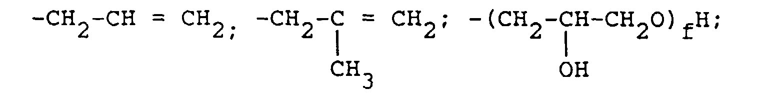 (wherein f is an integer ranging from 1 to 3) 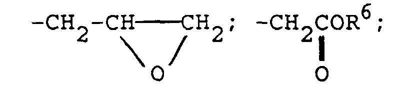 (wherein R⁶ is an alkyl group containing 1 to 30 carbon atoms and, optionally, ether bonds of the type -C-O-C-, or is a group -(CH₂-CH₂O)ₚH wherein p ranges from 1 to 10) 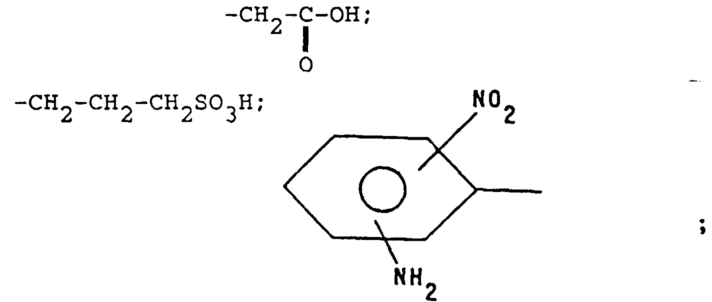 naphthyl; alkylbenzyl; and mono- or polysubstituted alkoxy benzyl groups of formulae 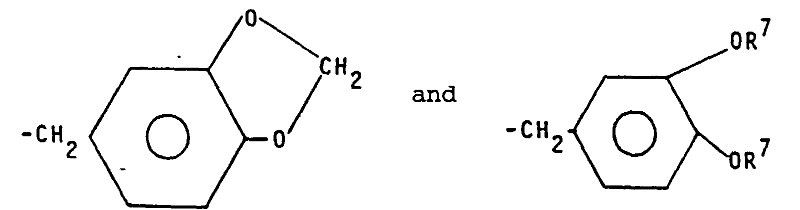 (wherein R⁷ is an alkyl group containing from 1 to 4 carbon atoms); or being a group NR⁸R⁹ wherein R⁸ and R⁹, the same or different from each other, represent hydrogen or groups R⁶ as defined above, or, when R⁸ is H, R⁹ can be a group of formula 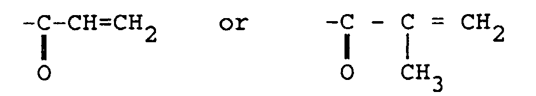
or R⁸ and R⁹ together form a cyclic group of formula 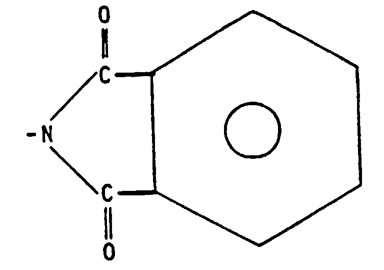 wherein the phenyl group can carry a substituent such as the anhydride group: 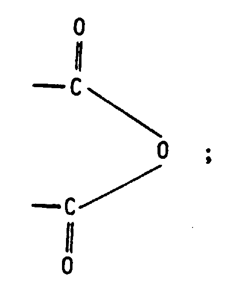
R''' being a group of formula NHR¹⁰ wherein R¹⁰ is hydrogen, alkyl having from 1 to 8 carbon atoms, mono- or polyhydroxyalkyl having from 1 to 8 carbon atoms, aminoalkyl having from 1 to 8 carbon atoms, allyl, methallyl, trimethoxy- or triethoxysilylalkyl of formula R¹¹-Si(OCH₃)₃ or R¹¹-Si(OC₂H₅)_{3,} R¹¹ being an alkylene group containing 1 to 8 carbon atoms, isocyanoalkyl of formula R¹²NCO, R¹² being an alkylene group having from 1 to 8 carbon atoms, isocyanocycloalkyl having 5 or 6 carbon atoms in the ring and isocyanoaryl having from 6 to 10 carbon atoms in the ring; all of said groups being optionally alkyl-substituted; or being an aromatic radical cal optionally substituted by halogen atoms and/or hydrocarbyl groups.

12. Mixtures of perfluoropolyethers according to any one of claims 1 and 8 to 11 wherein, in the meaning of X, m is zero and/or R" is selected from CF₃, C₂F₅, n-C₃F₇, i-C₃F₇, n-C₄F₉, i-C₄F₉ and t-C₄F₉, particularly from CF₃, C₂F₅ and n-C₃F₇.

## Patentansprüche

1. Mischungen von Perfluorpolyethern der allgemeinen Formel (I): 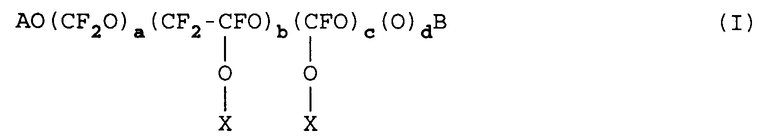 worin die Einheiten in Klammern statistisch entlang der Kette verteilt sind; X für eine Gruppe der Formel (CF₂O)ₘR" steht, wobei R" eine geradkettige Perfluoralkylgruppe mit 1 bis 10 Kohlenstoffatomen, eine verzweigtkettige Perfluoralkylgruppe mit 3 bis 10 Kohlenstoffatomen oder eine cyclische Perfluoralkylgruppe mit 3 bis 6 Kohlenstoffatomen ist und m im Bereich von 0 bis 6 liegt;
die Durchschnittswerte von a, b, c und d in der Mischung null oder solche Zahlen sind, daß die Summe (b + c) mindestens 2 beträgt und die Summe (a + b + c + d) nicht größer als 15000 ist;
mit der Maßgabe, daß wenn a und/oder c von null verschieden sind und auch b von null verschieden ist, das Verhältnis b/a + c in der Mischung im Bereich von 10⁻¹ bis 500 liegt; daß wenn a und c beide von null verschieden sind, das Verhältnis c/a in der Mischung im Bereich von 10⁻¹ bis 10 liegt; und daß wenn d von null verschieden ist, das Verhältnis d/(a + b + c) in der Mischung im Bereich von 0,05 bis 0,5 liegt; und
die Endgruppen A und B, gleich oder verschieden voneinander, ausgewählt sind aus 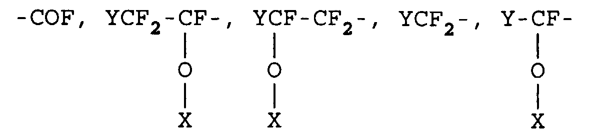
und einem Rest P, der aus R³ und R⁴-O(CF₂O)ₙ-CF₂- ausgewählt ist, worin R³ eine 1 bis 10 Kohlenstoffatome enthaltende Perfluoralkylgruppe ist, R⁴ eine 1 bis 3 Kohlenstoffatome enthaltende Perfluoralkylgruppe ist und n im Bereich von 1 bis 10 liegt; oder einem Rest, der durch Bindungsspaltung in einem aus geradkettigen und cyclischen Fluorkohlenstoffen, Chlorfluorkohlenstoffen, Perfluoraminen und perfluorierten Ethern ausgewählten Lösungsmittel gebildet wird, wobei Y H (nur für d = 0), F, Cl, COF oder einen wie oben definierten Rest P darstellt.

2. Verfahren zur Herstellung der Mischungen von Perfluorpolyethern nach Anspruch 1, in welchem in eine flüssige Phase, die bei einer Temperatur, die etwa +50°C nicht übersteigt, gehalten wird und ein Lösungsmittel und/oder einen oder mehrere Perfluoralkylvinylether der allgemeinen Formel (II):
CF_{**2**} = CF-OX (II)
worin X wie in Anspruch 1 definiert ist, umfaßt, ein gasförmiger Sauerstoffstrom und gegebenenfalls ein gasförmiger oder flüssiger Strom von einem oder mehreren Perfluoralkylvinylethern der Formel (II) eingeführt wird, wobei der letztgenannte Strom immer anwesend ist, wenn die flüssige Phase zu Beginn der Umsetzung keine derartigen Perfluoralkylvinylether enthält, und die flüssige Phase einer Bestrahlung mit Licht einer Wellenlänge von 200 bis 600 nm unterzogen wird.

3. Verfahren zur Herstellung der Mischungen von Perfluorpolyethern nach Anspruch 1, in welchem in eine flüssige Phase, die bei einer Temperatur, die +25°C nicht übersteigt, gehalten wird und ein Lösungsmittel und/oder einen oder mehrere Perfluoralkylvinylether der allgemeinen Formel (II) wie in Anspruch 2 definiert umfaßt, ein gasförmiger Sauerstoffstrom, ein gasförmiger oder flüssiger Strom von einer oder mehreren Verbindungen mit einer oder mehreren F-Q-Bindungen, wobei Q aus F und O ausgewählt ist, und gegebenenfalls ein gasförmiger oder flüssiger Strom von einem oder mehreren Perfluoralkylvinylethern der allgemeinen Formel (II) eingeführt wird, wobei der letztgenannte Strom immer anwesend ist, wenn die flüssige Phase zu Beginn der Umsetzung keine Perfluoralkylvinylether enthält.

4. Verfahren nach Anspruch 3, in welchem die Verbindungen mit einer oder mehreren F-Q-Bindungen aus F₂ und organischen Verbindungen, die eine oder mehrere Fluoroxy-Bindungen enthalten, insbesondere perfluorierten Alkyl- oder Alkylen-Verbindungen, die eine oder mehrere Fluoroxygruppen und gegebenenfalls ein oder mehrere Heteroatome enthalten, ausgewählt werden.

5. Verfahren nach irgendeinem der Ansprüche 2 bis 4, in welchem das Lösungsmittel, falls anwesend, aus geradkettigen und cyclischen Fluorkohlenstoffen, Chlorfluorkohlenstoffen, Perfluoraminen und perfluorierten Ethern ausgewählt wird.

6. Verfahren nach irgendeinem der Ansprüche 3 bis 5, in welchem ein unter den Reaktionsbedingungen inertes Gas ebenfalls in die flüssige Phase eingeführt wird.

7. Verfahren nach irgendeinem der Ansprüche 3 bis 6, in welchem die Fließgeschwindigkeit der Verbindung oder der Verbindungen mit einer oder mehreren F-Q-Bindungen im Bereich von 0,001 bis 5 Mol pro Stunde pro Liter flüssige Phase liegt.

8. Mischungen von Perfluorpolyethern nach Anspruch 1 mit der allgemeinen Formel (III): 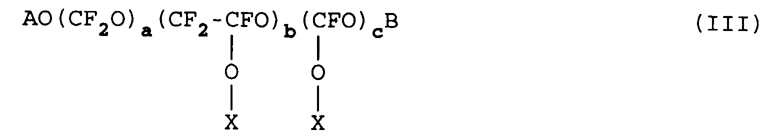 worin A, B, X, a, b und c wie in Anspruch 1 definiert sind.

9. Mischungen von Perfluorpolyethern nach Anspruch 1 mit Perfluoralkyl-Endgruppen, die gegebenenfalls eines oder mehrere Ether-Sauerstoffatome enthalten und die allgemeine Formel (IV) aufweisen: 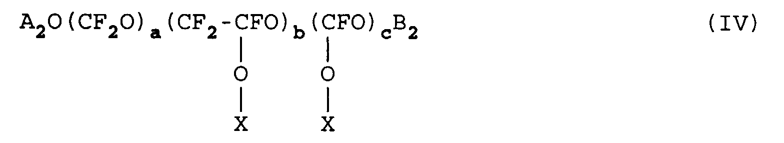 worin a, b, c und X wie in Anspruch 1 definiert sind und A₂ und B₂, gleich oder verschieden voneinander, ausgewählt sind aus: 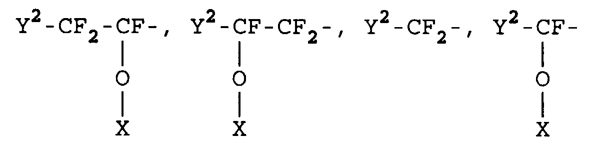 und Resten P, gebildet durch Bindungsspaltung in dem Initiator oder dem Lösungsmittel, der bzw. das in dem Verfahren zur Herstellung der Perfluorpolyether der allgemeinen Formel (I) verwendet wird, wobei Y² für F, Cl oder einen wie oben definierten Rest P steht.

10. Mischungen von Perfluorpolyethern nach Anspruch 1 mit einer oder zwei Fluoralkyl-Endgruppen, die die allgemeine Formel (V) aufweisen: 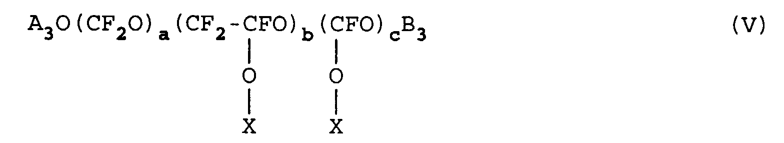 worin a, b, c und X wie in Anspruch 1 definiert sind und A₃ und B₃, gleich oder verschieden voneinander, ausgewählt sind aus: 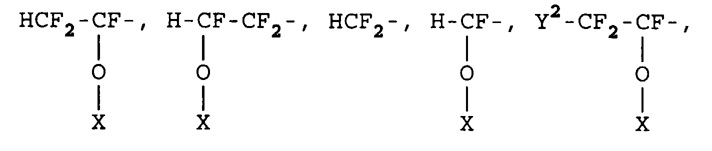 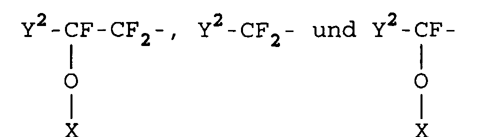 wobei Y² wie in Anspruch 9 definiert ist.

11. Mischungen von Perfluorpolyethern mit einer oder zwei funktionellen Endgruppen, die die allgemeine Formel (VI) aufweisen: 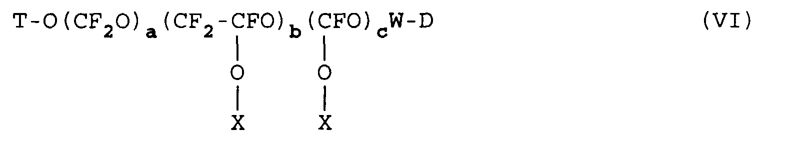 worin:
W eine Verbindungsgruppe der Formel -CF₂- oder 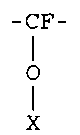 ist
T für D-W oder eine Perfluoralkyl- oder Oxyperfluoralkylgruppe T₁ steht,
die ausgewählt ist aus 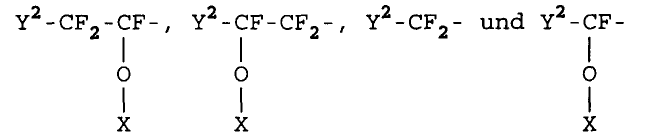 worin Y² wie in Anspruch 9 definiert ist;
X, a, b und c wie in Anspruch 1 definiert sind;
D ausgewählt ist aus CN, CH₂Z, COR'", 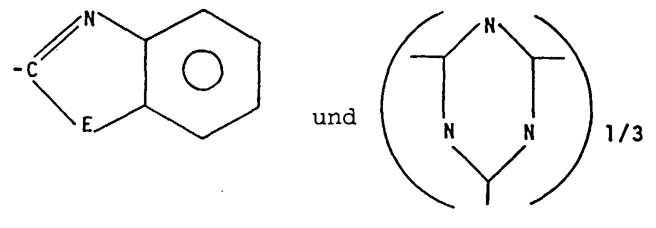 (worin E für NH, O oder S steht);
wobei Z eine Gruppe OR⁵ ist, worin R⁵ ausgewählt ist aus Wasserstoff; 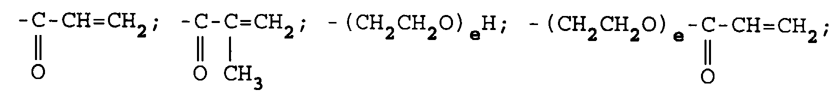 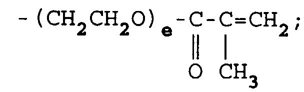 (worin e eine ganze Zahl von 1 bis 15 ist) 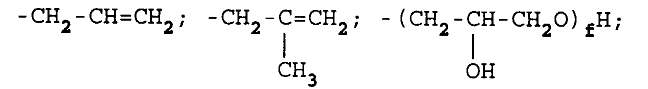 (worin f eine ganze Zahl im Bereich von 1 bis 3 ist) 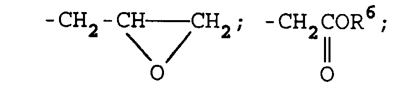 (worin R⁶ eine Alkylgruppe, die 1 bis 30 Kohlenstoffatome und gegebenenfalls Ether-Bindungen des Typs -C-O-C- enthält, ist oder eine Gruppe -(CH_{**2**}-CH_{**2**}O)_{**p**}H ist, worin p im Bereich von 1 bis 10 liegt) 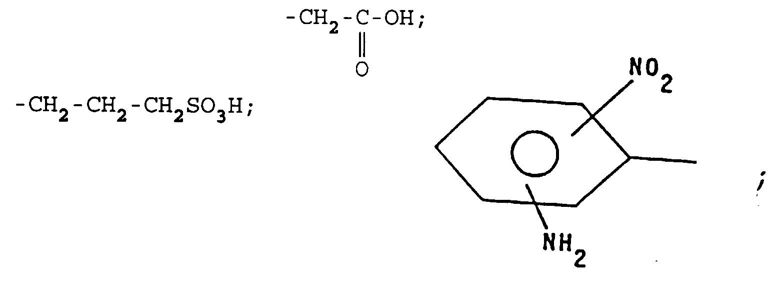 Naphthyl; Alkylbenzyl; und mono- oder polysubstituierten Alkoxybenzylgruppen der Formeln 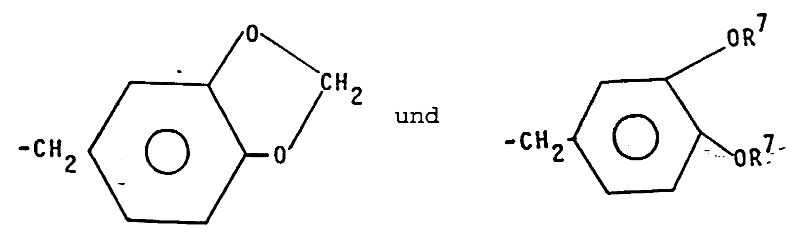 (worin R⁷ eine Alkylgruppe, die 1 bis 4 Kohlenstoffatome enthält, ist); oder
eine Gruppe NR^{**8**}R^{**9**} ist, wobei R^{**8**} und R^{**9**}, gleich oder verschieden voneinander, für Wasserstoff oder Gruppen R^{**6**} wie oben definiert stehen oder, wenn R^{**8**} für H steht, R^{**9**} eine Gruppe der Formel 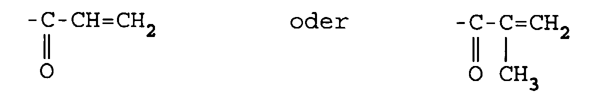 sein kann
oder R^{**8**} und R^{**9**} zusammen eine cyclische Gruppe der Formel 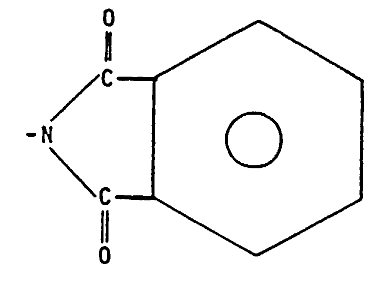 bilden, worin die Phenylgruppe einen Substituenten, wie beispielsweise die Anhydridgruppe: 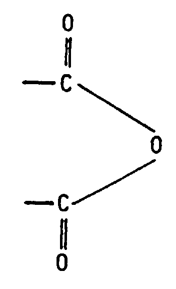 tragen kann;
wobei R"' eine Gruppe der Formel NHR^{**10**} ist, worin R^{**10**} für Wasserstoff, Alkyl mit 1 bis 8 Kohlenstoffatomen, Mono- oder Polyhydroxyalkyl mit 1 bis 8 Kohlenstoffatomen, Aminoalkyl mit 1 bis 8 Kohlenstoffatomen, Allyl, Methallyl, Trimethoxy- oder Triethoxysilylalkyl der Formel R^{**11**}-Si(OCH_{**3**})_{**3**} oder R^{**11**}-Si(OC_{**2**}H_{**5**})_{**3**}, wobei R^{**11**} eine Alkylengruppe mit 1 bis 8 Kohlenstoffatomen ist, Isocyanoalkyl der Formel R^{**12**}NCO, wobei R^{**12**} eine Alkylengruppe mit 1 bis 8 Kohlenstoffatomen ist, Isocyanocycloalkyl mit 5 oder 6 Kohlenstoffatomen im Ring und Isocyanoaryl mit 6 bis 10 Kohlenstoffatomen im Ring steht; wobei alle diese Gruppen gegebenenfalls Alkylsubstituiert sind; oder einen aromatischen Rest darstellt, der gegebenenfalls durch Halogenatome und/oder Kohlenwasserstoffgruppen substituiert ist.

12. Mischungen von Perfluorpolyethern nach irgendeinem der Ansprüche 1 und 8 bis 11, worin in der Bedeutung von X m null ist und/oder R" ausgewählt ist aus CF_{**3**}, C_{**2**}F_{**5**}, n-C_{**3**}F_{**7**}, i-C_{**3**}F_{**7**}, n-C_{**4**}F_{**9**}, i-C_{**4**}F_{**9**} und t-C_{**4**}F_{**9**}, insbesondere aus CF_{**3**}, C_{**2**}F_{**5**} und n-C_{**3**}F_{**7**}.

## Revendications

1. Mélanges de perfluoropolyéthers de la formule générale (I) : 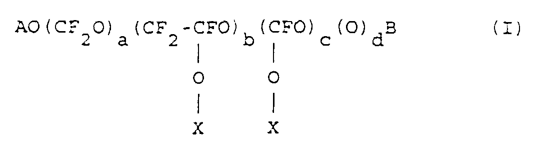 dans laquelle :
- les unités entre parenthèses sont distribuées de façon statistique le long des chaînes ;
- X représente un groupe de formule (CF₂O)ₘR", où R" est un groupe perfluoroalkyle à chaîne droite, ayant de 1 à 10 atomes de carbone, un groupe perfluoroalkyle à chaîne ramifiée, ayant de 3 à 10 atomes de carbone, ou un groupe perfluoroalkyle cyclique, ayant de 3 à 6 atomes de carbone, et m se situe dans la plage allant de 0 à 6 ;
- les valeurs moyennes de a, b, c et d dans le mélange sont zéro ou des nombres tels que la somme (b + c) est d'au moins 2 et la somme (a + b + c + d) est non supérieure à 15 000 ;
à la condition que, lorsque a et/ou c sont différents de zéro et également b est différent de zéro, le rapport b/a+c dans le mélange se situe dans la plage allant de 10⁻¹ à 500 ; que, lorsque a et c sont tous deux différents de zéro, le rapport c/a dans le mélange se situe dans la plage allant de 10⁻¹ à 10 ; et que, lorsque d est différent de zéro, le rapport d/(a+b+c) dans le mélange se situe dans la plage allant de 0,05 à 0,5 ; et
- les groupes d'extrémité A et B, identiques ou différents l'un de l'autre, sont choisis parmi : 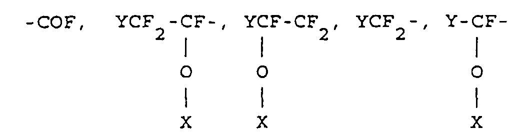 et un radical P choisi parmi R³ et R⁴-O(CF₂O)ₙ-CF₂-,
dans lequel R³ est un groupe perfluoroalkyle contenant de 1 à 10 atomes de carbone, R⁴ est un groupe perfluoroalkyle contenant de 1 à 3 atomes de carbone et n se situe dans la plage allant de 1 à 10 ; ou un radical formé par clivage de liaisons dans un solvant choisi parmi les fluorocarbures, chlorofluorocarbures, perfluoroamines et éthers perfluorés, à chaîne droite et cycliques, Y étant H (seulement pour d = 0), F, Cl, COF ou un radical P tel que défini ci-dessus.

2. Procédé de préparation des mélanges de perfluoropolyéthers tels que définis à la revendication 1, dans lequel, dans une phase liquide maintenue à une température ne dépassant pas environ +50°C et comprenant un solvant et/ou un ou plusieurs perfluoroalkylvinyléthers de la formule générale (II) :
CF₂ = CF-OX (II)
dans laquelle X est tel que défini à la revendication 1, sont introduits un courant d'oxygène gazeux et, facultativement, un courant gazeux ou liquide d'un ou plusieurs perfluoroalkylvinyléthers de formule (II), le dernier courant étant toujours présent si la phase liquide ne contient pas de tels perfluoroalkylvinyléthers au début de la réaction, et la phase liquide est soumise à une irradiation par de la lumière ayant une longueur d'onde allant de 200 à 600 nm.

3. Procédé de préparation des mélanges de perfluoropolyéthers tels que définis à la revendication 1, dans lequel, dans une phase liquide maintenue à une température ne dépassant pas +25°C et comprenant un solvant et/ou un ou plusieurs perfluoroalkylvinyléthers de la formule générale (II) telle que définie à la revendication 2, sont introduits un courant d'oxygène gazeux, un courant gazeux ou liquide d'un ou plusieurs composés ayant une ou plusieurs liaisons F-Q, où Q est choisi parmi F et O, et, facultativement, un courant gazeux ou liquide d'un ou plusieurs perfluoroalkylvinyléthers de formule générale (II), le courant mentionné en dernier étant toujours présent si la phase liquide ne contient pas de perfluoroalkylvinyléthers au début de la réaction.

4. Procédé selon la revendication 3, dans lequel les composés ayant une ou plusieurs liaisons F-Q sont choisis parmi F₂ et les composés organiques contenant une ou plusieurs liaisons fluoroxy, en particulier les composés alkyle ou alkylène perfluorés contenant un ou plusieurs groupes fluoroxy et, facultativement, un ou plusieurs hétéroatomes.

5. Procédé selon l'une quelconque des revendications 2 à 4, dans lequel le solvant, s'il y en a un, est choisi parmi les fluorocarbures, chlorofluorocarbures, perfluoroamines et éthers perfluorés, à chaîne droite et cycliques.

6. Procédé selon l'une quelconque des revendications 3 à 5, dans lequel un gaz inerte dans les conditions de la réaction est également introduit dans la phase liquide.

7. Procédé selon l'une quelconque des revendications 3 à 6, dans lequel le débit du composé ou des composés ayant une ou plusieurs liaisons F-Q se situe dans la plage allant de 0,001 à 5 moles par heure par litre de phase liquide.

8. Mélanges de perfluoropolyéthers selon la revendication 1, de la formule générale (III) : 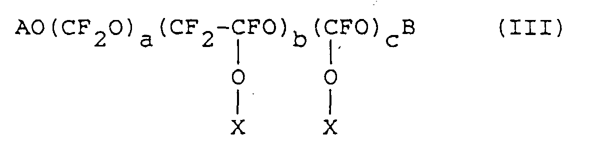 dans laquelle A, B, X, a, b et c sont tels que définis à la revendication 1.

9. Mélanges de perfluoropolyéthers selon la revendication 1, ayant des groupes terminaux perfluoroalkyle qui contiennent facultativement un ou plusieurs atomes d'oxygène d'éther et étant de la formule générale (IV) : 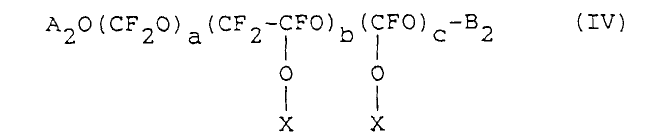 dans laquelle :
- a, b, c et X sont tels que définis à la revendication 1 ; et
- A₂ et B₂, identiques ou différents l'un de l'autre, sont choisis parmi : 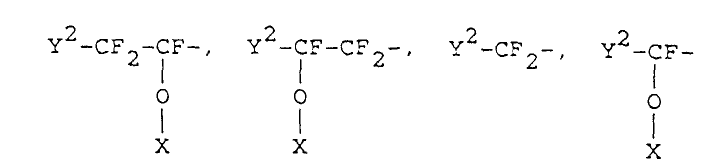 et les radicaux P formés par clivage de liaison dans l'amorceur ou le solvant utilisé dans le procédé pour préparer les perfluoropolyéthers de formule générale (I), Y² étant F, Cl ou un radical P tel que défini ci-dessus.

10. Mélanges de perfluoropolyéthers selon la revendication 1, ayant un ou deux groupes terminaux fluoroalkyle et étant de la formule générale (V) : 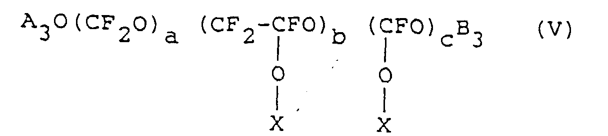 dans laquelle :
- a, b, c et X sont tels que définis à la revendication 1 ; et
- A₃ et B₃, identiques ou différents l'un de l'autre, sont choisis parmi : 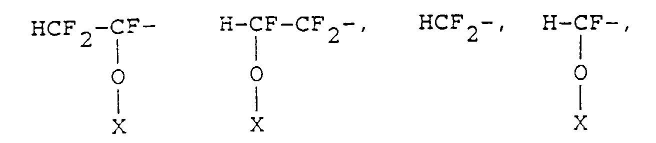 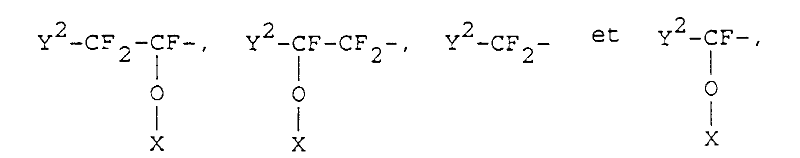 Y² étant tel que défini à la revendication 9.

11. Mélanges de perfluoropolyéthers ayant un ou deux groupes terminaux fonctionnels et étant de la formule générale (VI) : 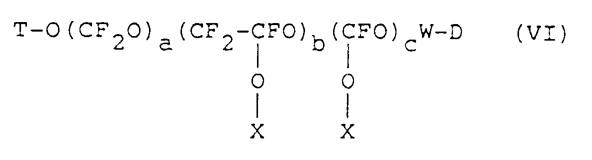 dans laquelle :
- W est un groupe de liaison de formule -CF₂- ou 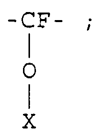
- T représente D-W ou un groupe perfluoroalkyle ou oxyperfluoroalkyle ou oxyperfluoroalkyle T₁ qui est choisi parmi : 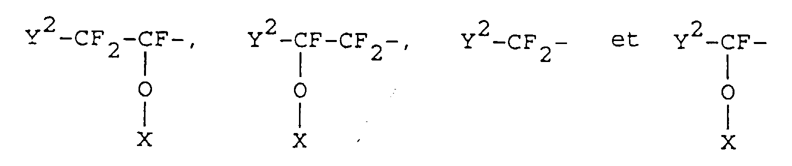 où Y² est tel que défini à la revendication 9 ;
- X, a, b et c sont tels que définis à la revendication 1 ;
- D est choisi parmi CN, CH₂Z, COR'", 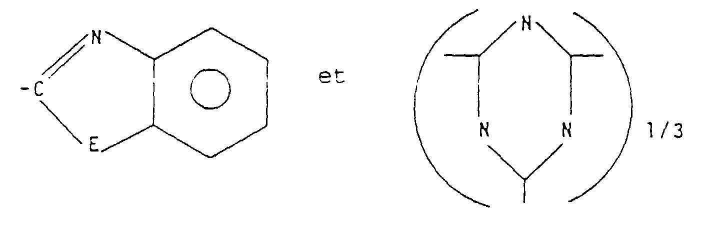 (où E représente NH, O ou S) ;
Z étant un groupe OR⁵, où R⁵ est choisi parmi l'hydrogène ; 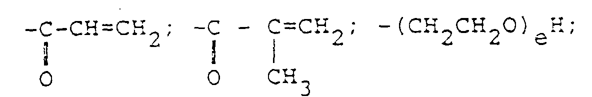 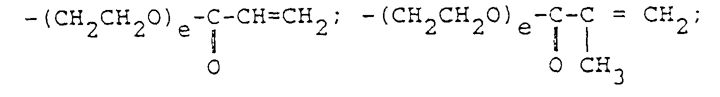 (où e est un entier de 1 à 15) 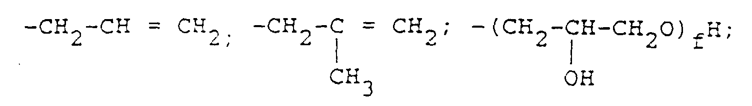 (où f est un entier se situant dans la plage allant de 1 à 3) 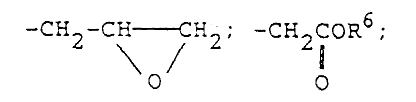 (où R⁶ est un groupe alkyle contenant 1 à 30 atomes de carbone et, facultativement, des liaisons éther du type -C-O-C-, ou est un groupe -(CH₂-CH₂O)ₚH où p se situe dans la plage allant de 1 à 10) 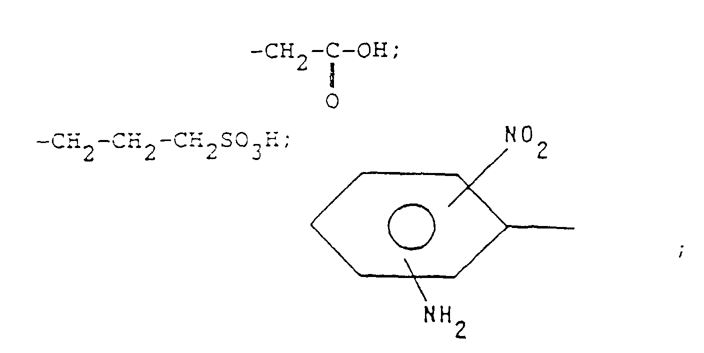 naphtyle ; alkylbenzyle ; et des groupes alcoxybenzyle mono- ou polysubstitués des formules 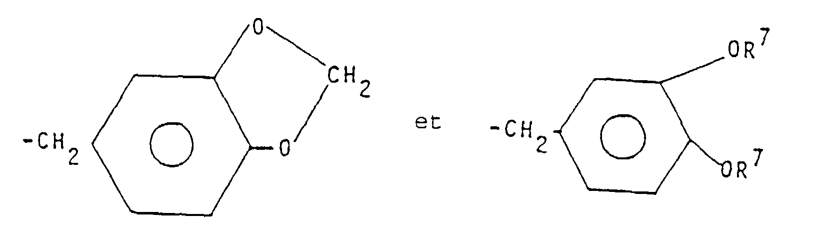 (où R⁷ est un groupe alkyle contenant de 1 à 4 atomes de carbone) ; ou
étant un groupe NR⁸R⁹ où R⁸ et R⁹, identiques ou différents l'un de l'autre, représentent hydrogène ou des groupes R⁶ tels que définis ci-dessus, ou, lorsque R⁸ représente H, R⁹ peut être un groupe de formule 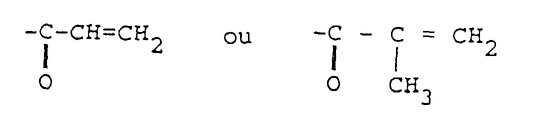 ou R⁸ et R⁹ forment ensemble un groupe cyclique de formule : 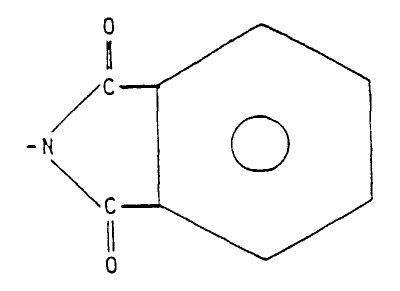 dans lequel le groupe phényle peut porter un substituant tel que le groupe anhydride : 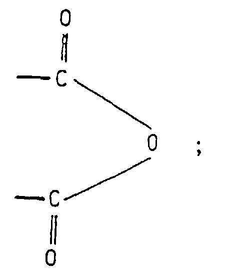 R"' étant un groupe de formule NHR¹⁰, où R¹⁰ représente hydrogène, alkyle ayant de 1 à 8 atomes de carbone, mono- ou polyhydroxyalkyle ayant de 1 à 8 atomes de carbone, aminoalkyle ayant de 1 à 8 atomes de carbone, allyle, méthallyle, triméthoxy- ou triéthoxysilylalkyle de formule R¹¹-Si(OCH₃)₃ ou R¹¹-Si(OC₂H₅)₃, R¹¹ étant un groupe alkylène contenant 1 à 8 atomes de carbone, isocyanoalkyle de formule R¹²NCO, R¹² étant un groupe alkylène ayant de 1 à 8 atomes de carbone, isocyanocycloalkyle ayant 5 ou 6 atomes de carbone dans le cycle et isocyanoaryle ayant de 6 à 10 atomes de carbone dans le cycle ; la totalité desdits groupes étant facultativement substituée par alkyle ; ou étant un radical aromatique facultativement substitué par des atomes d'halogène et/ou des groupes hydrocarbyle.

12. Mélanges de perfluoropolyéthers selon l'une quelconque des revendications 1 et 8 à 11, dans lesquels, dans la signification de X, m vaut zéro et/ou R" est choisi parmi CF₃, C₂F₅, n-C₃F₇, i-C₃F₇, n-C₄F₉, i-C₄F₉ et t-C₄F₉, en particulier parmi CF₃, C₂F₅ et n-C₃F₇.
